# EUROPEAN PATENT SPECIFICATION

(11) **EP 0 988 465 B1**
(45) Date of publication and mention of the grant of the patent: **29.09.2004**
(21) Application number: 98926480.9
(22) Date of filing: 09.06.1998
(51) Int. Cl.: F16D 41/12

(54) **OVERRUNNING PLANAR CLUTCH ASSEMBLY**
FLACHE FREILAUFKUPPLUNGEINHEIT
ENSEMBLE D'EMBRAYAGE PLANAIRE A ROUE LIBRE

(30) Priority: 09.06.1997 US 871192
(43) Date of publication of application: 29.03.2000
(73) Proprietor: MEANS INDUSTRIES, INC., Saginaw, MI 48601 (US)
(72) Inventor: RUTH, Stephen, M., Holly, MI 48442 (US); KLECKER, Brian, D., Chesterfield, VA 23838 (US)
(74) Representative: W.P. Thompson & Co.
(86) International application number: PCT/US1998/011944
(87) International publication number: WO 1998/057072

(56) References cited:
- WO-A-98/25041
- US-A- 4 049 099
- US-A- 5 597 057
- US-A- 5 699 889
- AVALLONE: 'Marks' Standard Handbook for Mechanical Engineers', 1996, MCGRAW-HILL, NEW YORK

## Description

### Technical Field

The invention relates to torque-transmitting couplings and, more particularly, to a one-way coupling apparatus having planar coupling members.

### Background Art

It is common practice in the management of torque distribution in a power transmission mechanism to employ overrunning couplings, acting alone or in combination with a friction coupling, to selectively establish torque transfer from one torque transfer member to another, or for anchoring a torque transfer member to a stationary housing and thereby provide a reaction point as torque is delivered from a torque input member to a driven member. In the case of a geared power transmission mechanism, for example, plural torque delivery paths are established for transfer of torque from a source of torque, such as an internal combustion engine, to a driven member such as a torque output shaft connected to a driving axle for a wheeled vehicle. The overrunning couplings in such transmission mechanisms permit the transfer of torque from a driving member to a driven member when the driving member rotates in one direction relative to the driven member, while further permitting freewheeling motion of the driving member relative to the driven member when the driving member rotates in the other direction relative to the driven member, as when torque is interrupted.

Such overrunning couplings may include concentric inner and outer clutch or brake races with tiltable sprag elements disposed within the races for torque transfer from one race to the other when torque is delivered in one direction through the mechanism. Upon a torque reversal, the sprag elements will permit free-wheeling motion of one race with respect to the other. Another common overrunning coupling assembly comprises concentric inner and outer races, one of the races being cammed. Coupling rollers are disposed between the races, each roller engaging a separate cam surface. Upon torque distribution in one direction through the coupling, the rollers engage the cam surfaces; but upon a torque reversal, the rollers are allowed to disengage their respective cam surfaces as relative overrunning motion of the races is permitted.

U.S. Patent No. 5,597,057 issued January 28, 1997, describes a planar overrunning coupling assembly including a pair of coupling plates rotatable about a common axis whose planar coupling faces are situated in close juxtaposed relationship. Each coupling plate includes a plurality of recesses formed in its planar coupling face. Generally flat, torque-transmitting struts are received within the recesses of one coupling plate while a spring positioned beneath each strut urges the strut to pivot about a pivot axis, whereby each strut projects from the recess in the one coupling plate into engagement with recesses formed in the other coupling plate.

When torque is transferred from one coupling plate to the other coupling plate in one direction, at least one strut becomes locked in the respective recesses of the coupling plates. If the driven coupling plate overruns the driving coupling plate when torque transfer is interrupted, the struts will ratchet over the recesses of the driven plate, each strut pivoting about its respective pivot axis while still being urged by its respective spring into ratcheting engagement with the driven coupling plate. This ratcheting engagement of the struts and the driven coupling in the overrunning condition generates unwanted noise while further causing undesirable wearing of both the struts and the driven coupling plate.

Additional wearing of the struts and coupling plates may occur if the struts are permitted to float within their respective coupling plate recesses, particularly when it is either undesirable or impractical to lubricate the juxtaposed coupling plate faces with a large quantity of lubricating oil during operation. In the planar overrunning coupling disclosed in U.S. Patent No. 5,597,057, the struts include lateral ear portions that are received in complementary recesses formed in each of the strut pockets. The lateral ear portions serve to locate and stabilize the strut within the pockets to thereby prevent the strut from floating when one coupling plate rotates relative to the other in the overrunning direction at relatively high relative speeds.

Additionally, the stresses that are induced in the generally flat struts that transfer torque from the driving coupling plate to the driven coupling plate of such known planar overrunning couplings can be extreme, particularly where tolerance variations between the struts and the cooperating pockets of the coupling plates are such that a greater load is carried by one strut relative to another strut.

### Disclosure Of The Invention

It is an object of the invention to provide an overrunning coupling that does not require precision machining operations that would be inherent in the manufacture of conventional sprag-type couplings or overrunning roller coupling assemblies.

It is also an object of the invention to provide a planar overrunning coupling which avoids the wear problems which may be associated with prior art planar overrunning couplings.

It is also an object of the invention to provide a planar overrunning coupling capable of transmitting increased torque between its driving and driven coupling plates.

It is a further object of the invention to provide an planar overrunning coupling wherein the overrunning condition is characterized by an absence of ratcheting engagement of any strut with a coupling plate.

It is a further object of the invention to provide a planar overrunning coupling wherein the overrunning condition is characterized by formation of a hydrodynamic boundary layer between the struts and a coupling plate.

In accordance with the present invention, there is provided a planar overrunning coupling including a pair of coupling plates with generally planar coupling faces situated in close juxtaposed relationship, each coupling plate being rotatable about a common axis, and each coupling face including at least one pocket; and a strut having a first end surface engageable with a first torque-load-bearing shoulder defined by a first pocket in the coupling face of one coupling plate and a second end surface engageable with a second torque-load-bearing shoulder defined by a second pocket in the coupling face of the other coupling plate, characterised in that in plan view the first strut end surface is provided with a first radius of curvature, and the first shoulder is provided with a second radius of curvature equal to or greater than the first radius of curvature.

This strategic geometric relationship of the strut with respect to the pockets makes it possible to distribute forces on the strut over an increased area, thereby reducing stress on the torque-transmitting elements.

In accordance with another feature of the invention, each strut is formed with non-parallel end surfaces, and the pockets of the coupling plates are formed with complementary non-parallel strut-engaging shoulders. This improved geometry has the further advantage of simplifying the manufacture of both the coupling plates and the struts, regardless of whether the coupling plates or the struts are formed using powder metallurgy techniques or using conventional machining techniques.

In accordance with another feature of the invention, the planar overrunning coupling may include multiple active struts to effect an increased torque transmitting capacity of the coupling. Specifically, in a preferred embodiment, the pockets in the coupling plate faces are angularly spaced about the axis of the coupling so that at least two struts will be active and capable of simultaneously transmitting torque from the driving coupling plate to the driven coupling plate. Such simultaneous torque transmission distributes the applied load among the active struts, thereby substantially increasing the torque-transmitting capacity of the coupling. The number of pockets or recesses in the plate may be varied, as desired, depending upon the number of strut engagements that are required for a particular application.

In accordance with yet another feature of the invention, the planar overrunning coupling establishes a hydrodynamic boundary layer of lubricating fluid between each strut and one of the coupling plate faces when operated the overrunning condition at relatively high speed. This boundary layer generates a hydrodynamic bearing effect which prevents the ratcheting engagement of the struts and the coupling plate face during such high-speed overrunning operation.

### Brief Description Of The Drawings

FIGURE 1 shows a structural environment in the form of a power transmission mechanism having torque delivery elements in which relative motion between the elements is controlled by my improved coupling;
FIGURE 2 is a cross-sectional view taken on a radial plane that contains the axis of the transmission elements of Figure 1 wherein the clutch structure itself is illustrated in enlarged form;
FIGURE 3 is a plan view of the clutch assembly shown in Figure 2;
FIGURE 4 is a cross-sectional view of the clutch assembly of Figure 3 as seen from the plane of section line 4-4 of Figure 3;
FIGURE 5 is an enlargement of the portion of the clutch structure shown in Figure 3 as seen from the plane of section line 5-5 of Figure 3;
FIGURE 6 is a plan view of the driven coupling plate illustrated in the assembly views of Figures 1-5;
FIGURE 7a shows a plan view of a strut that forms an element of my improved coupling structure;
FIGURE 7b is a side elevation view of the strut shown in Figure 7a;
FIGURE 7c is a cross-sectional view as seen from the plane of section line 7c-7c of Figure 7a;
FIGURES 8a, 8b and 8c are views of an alternate strut construction that may be used in lieu of the strut construction shown respectively in Figures 7a, 7b and 7c.

### Best Modes For Carrying Out The Invention

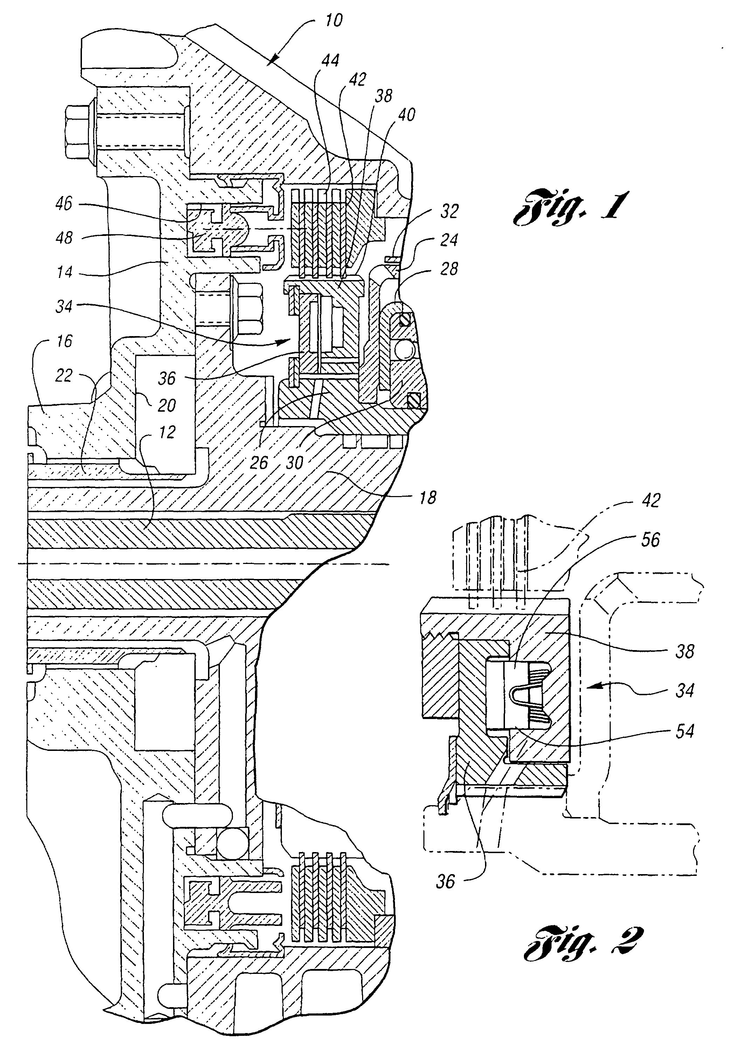

Figure 1 shows a power transmission housing 10 for a multiple ratio power transmission mechanism for an engine powered vehicle. A torque input shaft, which may be connected to the driven shaft of a hydrokinetic torque converter, is shown at 12. The impeller of the hydrokinetic torque converter is connected to the crankshaft of an internal combustion engine through a suitable damper mechanism.

A stationary forward support wall 14 supports a torque converter stator shaft 16 and a sleeve shaft 18 for rotatably journalling a clutch and brake assembly for the transmission. The support wall has a pump cavity 20 which encloses the positive displacement pump elements of a transmission pump, the input shaft for which is a sleeve shaft 22 extending through the stator shaft 16.

A brake drum 24 is connected to brake drum hub 26 journalled on stationary sleeve shaft 18.

Located in the drum 24 is a clutch cylinder 28 which encloses an annular clutch piston 30. The cylinder 28 and the piston 30 define a pressure cavity which, when pressurized, urges the piston 30 to a clutch engaging position, which permits transfer of torque from shaft 12 to member 26. The drum 24 is surrounded by a friction brake band 32 which, when activated, anchors the drum 24, thereby holding member 26 stationary.

An exemplary embodiment of a planar overrunning coupling in accordance with the invention is generally designated by reference character 34. The coupling 34 includes a first planar coupling plate 36, which is splined to member 26, and a second planar coupling plate 38, which is provided with external splines 40.

Internally splined brake disks 42 are drivably engaged with splines 40. They are arranged in inter-digital relationship with respect to externally splined separator plates 44, which are engaged with and held by internal splines formed in the surrounding portion of the housing 10.

The housing 10 and the stationary plate 14 define an annular cylinder 46 within which is situated annular piston 48. Compression springs 50 are seated on spring seat 52 and normally urge the piston 48 away from the friction disks 42.

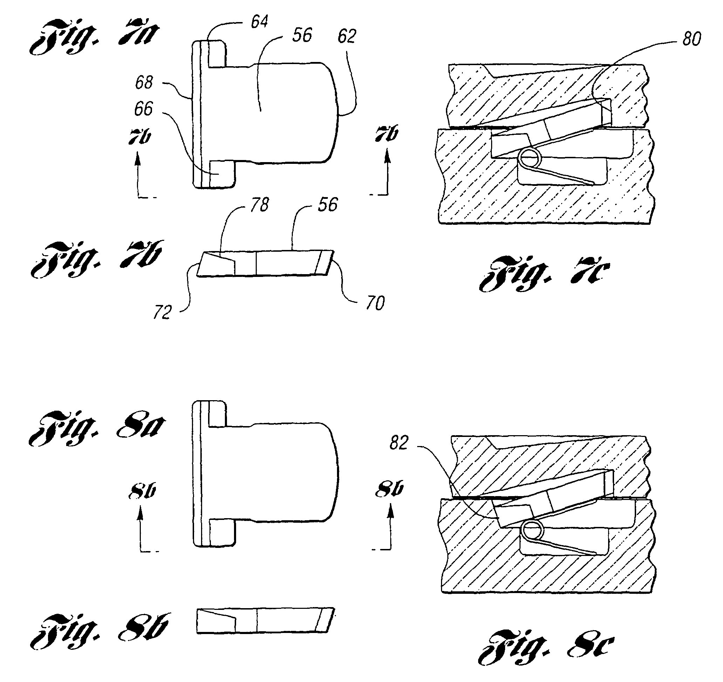

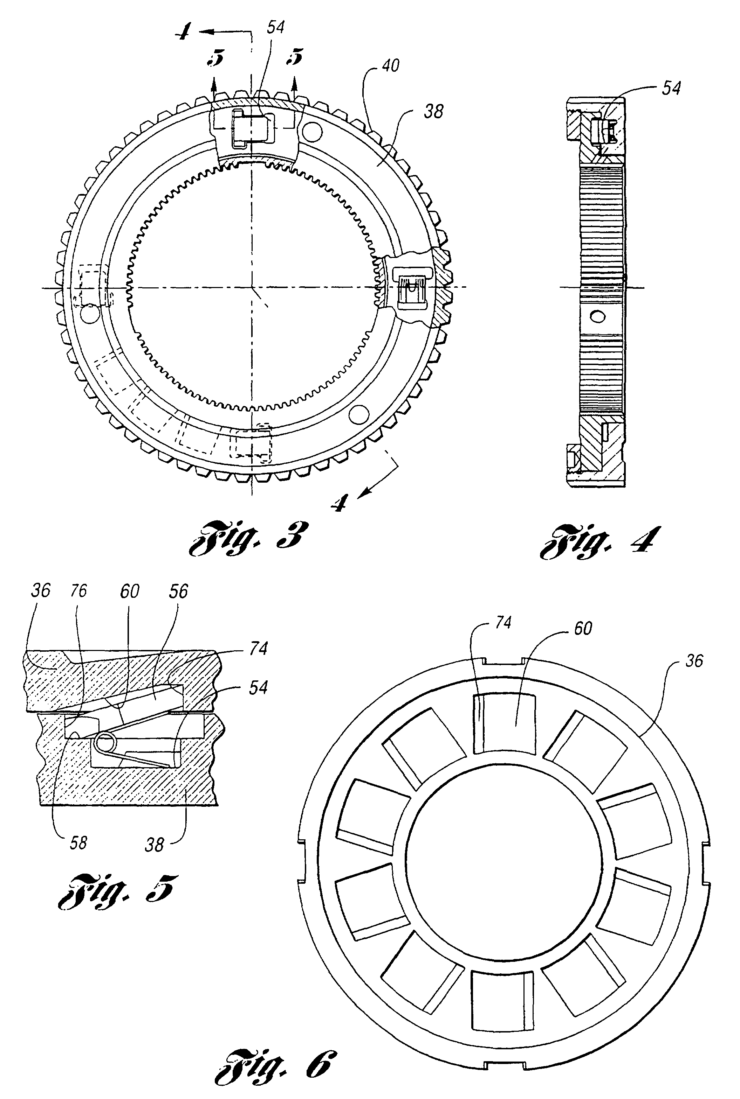

As seen in Figures 2, 3 and 4, the second planar coupling plate 38 comprises a series of angularly-spaced pockets 54, each of which receives a tiltable, generally planar strut 56. Each strut is secured at one margin thereof on a shoulder 58 formed in the second planar coupling plate 38.

As seen in Figure 5, the first planar coupling plate 36 is provided with pockets 60, which are adapted to receive the struts 56 upon pivotal movement of the struts 56 about the edge that engages the shoulder 58. The pockets 60 in the first coupling plate 36 are arranged at the same radial position relative to the coupling's rotational axis as the pockets 54 in the second coupling plate 38. The juxtaposed faces of the coupling plates 36,38 are in close proximity when the coupling 34 is assembled, as shown in Figure 5.

As seen in Figure 3, there are four recesses 54 in the face of the second coupling plate 38, positioned at 90 degree intervals to the coupling's rotational axis.

There are ten pockets 60 formed in the face of the first coupling plate 36, as seen in Figure 6. It will be appreciated that the invention contemplates that the number of pockets 60,54 in the coupling plates 36,38 could be different than the number illustrated. For example, the embodiment shown in Figure 6 has ten pockets 60 in the first coupling plate 36 and they are evenly circumferentially-spaced. Thus, one pocket 60 will be located 180° from another. The second coupling plate 38 in Figure 3 has at least two (e.g., four) recesses which are likewise evenly spaced. Thus, one pocket 54 will be located 180° from another. This configuration of the pockets 54,60 will ensure that at least two struts 56 may be active, i.e., capable of simultaneously transmitting torque from the second coupling plate 38 to the first coupling plate 36, at any given time.

A predetermined amount of relative displacement of the plates 36,38 may occur before the pockets 60,54 will establish full registry which will allow tilting motion of the struts 56 into engagement with the pockets of an adjacent coupling plate. An increased number of pockets 60,54 in the coupling plates 36,38 will decrease the extent of such relative displacement. This increases the so-called resolution of the coupling 34. The resolution that would be used for a particular application will depend upon the design specification. A coupling 34 used in a stator assembly for a hydrokinetic torque converter, for example, would have design specifications that would differ from the specifications for a chain drive sprocket.

If the second coupling plate 38 has four pockets 54 and the first coupling plate 36 has ten pockets 60, two struts 56 may engage simultaneously. If the second coupling plate 38 has four pockets 54 and the first coupling plate 36 has twelve pockets 60, four simultaneous strut engagements are possible. If second coupling plate 38 has five pockets 54 and the first coupling plate 36 has fifteen pockets 60, five simultaneous strut engagements are possible. The torque transmitting capacity increases as the number of strut engagements increases.

When the second coupling plate 38 rotates in the clockwise direction as viewed in Figure 3, the coupling 34 is capable of establishing a lock-up driving connection between the coupling plates 38,36 as the struts 56 engage their respective pockets 54,60. If the coupling plates 38,36 are rotated in their opposite relative direction as viewed in Figure 3, the struts 56 are removed from the pockets 60 of the first coupling plate 36, thereby permitting free-wheeling relative motion.

A strut 56 is shown in plan view in Figure 7a. The first end 62 of the strut 56 as seen in Figure 7a is formed with an arcuate shape. The second end 68 of the strut 56 as seen in Figure 7a has a pair of ears 64,66 formed integrally with the strut 56. The ears 64,66 extend into complementary recesses formed in the pockets 54 of the second coupling plate 38. The ears 64,66 are formed, as shown in Figure 7a, so that they are generally aligned with the second end 68 of the strut 56. The second end 68 of the strut engages the shoulder 58 formed in the pocket 54 of the second coupling plate 38 as explained previously.

As seen in Figure 7b, the strut 56 is provided with canted end surfaces 70,72. The first end surface 70, when it is tilted into the pocket 60, will conform to the shape of the shoulder 74 in the pocket 60 so that thrust forces in the strut 56 will be distributed over substantially the entire surface of the strut tip.

The second end surface 72 of the strut 56 is formed in a plane that is generally parallel to the plane of the first end surface 70, thereby permitting substantially full engagement of the entire area of the second end surface 72 over the surface of the shoulder 76 defined within the pocket 54 in the second coupling plate 38.

In accordance with a feature of the invention, the geometry of the ends 62,68 and end surfaces 70,72 of the strut 56 avoids line contact and, hence, high stresses when the strut 56 transfers torque loads from the second (nominally driving) coupling plate 38 to the first (nominally driven) coupling plate 36.

The ears 64,66 on each strut 56 are provided with a taper 78 to avoid interference between the ears 64,66 and the face of the first coupling plate 36 as each strut 56 is tilted into the pocket 60.

As seen in Figure 7c, the shoulder 80 defined in the first coupling plate's pocket 60 is rounded so that it generally conforms to the shape of the first end 62 of the strut 56. The radius of curvature of the shoulder 80 is equal to or slightly greater than the radius of curvature of the end 62 of the strut 56. This strut and pocket geometry, together with the inherent compressibility and elasticity of the materials, increases the bearing area and reduces unit compressive stresses.

Figures 8a-8c respectively show a strut design corresponding substantially to that of Figures 7a-7c, but with a generally straight second strut end 82.

## Claims

1. A planar overrunning coupling (34) including a pair of coupling plates (36,38) with generally planar coupling faces situated in close juxtaposed relationship, each coupling plate (36,38) being rotatable about a common axis, and each coupling face including at least one pocket (54,60); and a strut (56) having a first end surface (62) engageable with a first torque-load-bearing shoulder (80) defined by a first pocket (60) in the coupling face of one coupling plate (36) and a second end surface (68) engageable with a second torque-load-bearing shoulder (76) defined by a second pocket (54) in the coupling face of the other coupling plate (38), **characterised in that** in plan view the first strut end surface (62) is provided with a first radius of curvature, and the first shoulder (80) is provided with a second radius of curvature equal to or greater than the first radius of curvature.

2. The coupling (34) of claim 1, wherein the strut (56) is generally planar, and wherein the first radius of curvature of the first strut end surface (62) lies within the plane of the strut (56).

3. The coupling (34) of claim 1 or claim 2, wherein at least one of the first and second strut end surfaces (62,68) includes a rounded corner with a third radius of curvature, and wherein at least one of the first and second pockets (54,60) includes a rounded shoulder having a fourth radius of curvature substantially equal to the third radius of curvature.

4. The coupling (34) of any of claims 1 to 3, wherein the strut (56") includes a pair of oppositely-projecting ears (64',66') proximate to the second end surface (68) thereof and wherein the second pocket (54') includes a pair of diametrical recesses (86) respectively adapted to receive the strut ears (64',66"), the recesses (86) cooperating with the strut ears (64',66") to secure the strut (56") in the second pocket (54").

5. The coupling (34) of claim 4, wherein each respective strut ear (64',66") includes a first angled surface (84), wherein each respective recess (86) in the second pocket (54") of the other coupling plate (38") includes a second angled surface (87) in opposition with the first angled surface (84) of the respective strut ear (64",66"), and wherein the first and second angled surfaces (84,87) cooperate to prevent engagement of the first strut end surface (62) with the first pocket (60) of the one coupling plate (36") when the one coupling plate (36") overruns the other coupling plate (38").

6. The coupling (34) of any of claims 1 to 5, wherein a retainer clip (90) on the other coupling plate (38"') overlies the strut (56"') proximate to the second end surface (68) thereof, the retainer clip (90) maintaining the strut (56"') in the second pocket (54"') of the other coupling plate (38"').

7. The coupling (34) of claim 6 wherein the strut (56"') includes an aperture (96) formed therein proximate to the second end surface (68) thereof, and wherein a portion of the retainer clip (96) extends into the strut aperture (96).

## Patentansprüche

1. Planare Freilaufkupplung (34) die ein Paar Kupplungsplatten (36, 38) mit allgemein planaren Kupplungsflächen, welche in einem eng nebeneinanderliegenden Verhältnis angeordnet sind, wobei jede Kupplungsplatte (36, 38) um eine gemeinsame Achse drehbar ist, und jede Kupplungsfläche mindestens eine Tasche (54, 60) einschließt; und eine Verstrebung (56) mit einer ersten Endoberfläche (62) einschließt, die mit einer ersten Drehmomentlasttrageschulter (80) in Eingriff kommen kann, die durch eine erste Tasche (60) in der Kupplungsfläche einer Kupplungsplatte (36) definiert ist, und einer zweiten Endfläche (68), die mit einer zweiten Drehmomentlasttrageschulter (76) in Eingriff kommen kann, welche durch eine zweite Tasche (54) in der Kupplungsfläche der anderen Kupplungsplatte (38) definiert ist, **dadurch gekennzeichnet, dass** die erste Verstrebungsendfläche (62) in Draufsicht mit einem ersten Krümmungsradius versehen ist, und die erste Schulter (80) mit einem zweiten Krümmungsradius gleich oder größer als der erste Krümmungsradius versehen ist.

2. Kupplung (34) nach Anspruch 1, bei der die Verstrebung (56) allgemein eben ist, und bei der der erste Krümmungsradius der ersten Verstrebungsendfläche (62) innerhalb der Ebene der Verstrebung (56) liegt.

3. Kupplung (34) nach Anspruch 1 oder Anspruch 2, bei der mindestens eine der ersten und zweiten Verstrebungsendflächen (62, 68) eine gerundete Ecke mit einem dritten Krümmungsradius einschließt, und bei der mindestens eine der ersten und zweiten Taschen (54, 60) eine gerundete Schulter mit einem vierten Krümmungsradius umfasst, der im wesentlichen gleich dem dritten Krümmungsradius ist.

4. Kupplung (34) nach einem der Ansprüche 1 bis 3, bei der die Verstrebung (56") ein Paar entgegengesetzt vorspringender Ansätze (64", 66") nahe der zweiten Endfläche (68) derselben aufweist, und bei der die zweite Tasche (54") ein Paar diametraler Ausnehmungen (86) einschließt, die jeweils zum Aufnehmen der Verstrebungsansätze (64", 66") ausgelegt sind, wobei die Ausnehmungen (86) mit den Verstrebungsansätzen (64", 66") zusammenwirken, um die Verstrebung (56") in der zweiten Tasche (54") zu befestigen.

5. Kupplung (34) von Anspruch 4, bei der jeder jeweilige Verstrebungsansatz (64", 66") eine erste abgewinkelte Oberfläche (84) einschließt, wobei jede jeweilige Ausnehmung (86) in der zweiten Tasche (54") der anderen Kupplungsplatte (38") eine zweite abgewinkelte Oberfläche (87) entgegengesetzt der ersten abgewinkelten Oberfläche (84) des jeweiligen Verstrebungsansatzes (64", 66") einschließt, und wobei die erste und zweite abgewinkelte Oberfläche (84, 87) zusammenwirken, um Eingriff der ersten Verstrebungsendfläche (62) mit der ersten Tasche (60) der einen Kupplungsplatte (36") zu verhindern, wenn die eine Kupplungsplatte (36") die andere Kupplungsplatte (38") überläuft.

6. Kupplung (34) nach einem der Ansprüche 1 bis 5, bei der ein Halteclip (90) an der anderen Kupplungsplatte (38"') die Verstrebung (56"') nahe der zweiten Endfläche (68) derselben überlagert, wobei der Halteclip (90) die Verstrebung (56"') in der zweiten Tasche (54"') der anderen Kupplungsplatte (38"') hält.

7. Kupplung (34) von Anspruch 6, bei der die Verstrebung (56"') eine darin nahe der zweiten Endoberfläche (68) derselben ausgebildete Öffnung (96) aufweist, und bei der ein Teil des Halteclips (96) sich in die Verstrebungsöffnung (96) erstreckt.

## Revendications

1. Accouplement plan à roue libre (34) comprenant une paire de plateaux d'accouplement (36, 38) avec des faces d'accouplement généralement planes situées dans un rapport juxtaposé étroit, chaque plateau d'accouplement (36, 38) pouvant être tourné autour d'un axe commun, et chaque face d'accouplement comprenant au moins une poche (54, 60) ; et une entretoise (56) ayant une première surface d'extrémité (62) pouvant être engagée avec un premier épaulement porteur de charge de torsion (80) défini par une première poche (60) dans la face d'accouplement d'un plateau d'accouplement (36) et une deuxième surface d'extrémité (68) pouvant être engagée avec un deuxième épaulement porteur de charge de torsion (76) défini par une deuxième poche (54) dans la face d'accouplement de l'autre plateau d'accouplement (38), **caractérisé en ce que**, en vue en plan, la première surface d'extrémité de l'entretoise (62) est pourvue d'un premier rayon de courbure, et le premier épaulement (80) est pourvu d'un deuxième rayon de courbure égal ou plus grand que le premier rayon de courbure.

2. L'accouplement (34) de la revendication 1, dans lequel l'entretoise (56) est généralement plane, et dans lequel le premier rayon de courbure de la première surface d'extrémité de l'entretoise (62) se trouve dans le plan de l'entretoise (56).

3. L'accouplement (34) de la revendication 1 ou de la revendication 2, dans lequel au moins une des première et deuxième surfaces d'extrémité de l'entretoise (62, 68) comprend un coin arrondi avec un troisième rayon de courbure, et dans lequel au moins une des première et deuxième poches (54, 60) comprend un épaulement arrondi ayant un quatrième rayon de courbure essentiellement égal au troisième rayon de courbure.

4. L'accouplement (34) de l'une quelconque des revendications 1 à 3, dans lequel l'entretoise (56") comprend une paire d'oreilles faisant saillie de côtés opposés (64", 66") à proximité de la deuxième surface d'extrémité (68) de celle-ci et dans lequel la deuxième poche (54") comprend une paire d'évidements diamétraux (86) adaptés respectivement pour recevoir les oreilles de l'entretoise (64", 66"), ces évidements (86) coopérant avec les oreilles de l'entretoise (64", 66") pour fixer l'entretoise (56") dans la deuxième poche (54").

5. L'accouplement (34) de la revendication 4, dans lequel chaque oreille d'entretoise respective (64", 66") comprend une première surface inclinée (84), dans lequel chaque évidement respectif (86) dans la deuxième poche (54") de l'autre plateau d'accouplement (38") comprend une deuxième surface inclinée (87) en opposition avec la première surface inclinée (84) de l'oreille d'entretoise respective (64", 66"), et dans lequel la première et la deuxième surface inclinée (84, 87) coopèrent afin d'empêcher l'engagement de la première surface d'extrémité de l'entretoise (62) avec la première poche (60) de l'un plateau d'accouplement (36") lorsque l'un plateau d'accouplement (36") tourne en roue libre sur l'autre plateau d'accouplement (38").

6. L'accouplement (34) de l'une quelconque des revendications 1 à 5, dans lequel une pince de retenue (90) sur l'autre plateau d'accouplement (38"') est placée au-dessus de l'entretoise (56"') à proximité de la deuxième surface d'extrémité (68) de celle-ci, cette pince de retenue (90) maintenant l'entretoise (56"') dans la deuxième poche (54"') de l'autre plateau d'accouplement (38"').

7. L'accouplement (34) de la revendication 6 dans lequel l'entretoise (56"') comprend une ouverture (96) formée à l'intérieur à proximité de la deuxième surface d'extrémité (68) de celle-ci, et dans léquel une portion de la pince de retenue (96) s'étend à l'intérieur de l'ouverture de l'entretoise (96).
